# EUROPÄISCHE PATENTSCHRIFT

(11) **EP 1 696 710 B1**
(45) Veröffentlichungstag und Bekanntmachung des Hinweises auf die Patenterteilung: **01.05.2013**
(21) Anmeldenummer: 06001078.2
(22) Anmeldetag: 19.01.2006
(51) Int. Cl.: H05B 37/02, H05B 39/04

(54) **Einbaudimmer**
Built-in dimmer
Dimmer encastrable

(30) Priorität: 03.02.2005 DE 102005004884
(43) Veröffentlichungstag der Anmeldung: 30.08.2006
(73) Patentinhaber: ABB AG, 68309 Mannheim (DE)
(72) Erfinder: Clever, Gerhard, Dipl.-Ing., 58553 Halver (DE); Georgi, Dieter, Dipl.-Ing., 58313 Herdecke (DE); Goldyn, Dirk, Dipl.-Ing., 58454 Witten (DE); Selzer, Uwe, 58511 Lüdenscheid (DE); Siebe, Michael, 658579 Schalksmühle (DE); Schneider, Martin, 42499 Hückeswagen (DE)

(56) Entgegenhaltungen:
- EP-A- 0 391 211
- EP-A- 0 581 205
- EP-A- 0 993 094
- DE-U1- 29 622 062

## Beschreibung

Die Erfindung bezieht sich auf einen Einbaudimmer gemäß dem Oberbegriff des Anspruchs 1. Die Erfindung kann in Verteilerschränken der Installationstechnik Anwendung finden.

Aus dem Katalog 2004 der Busch-Jaeger Elektro GmbH - BJE 0001-0-0898/9.03/0502-B, dpi 030690 - Seite 173/174 sind unterschiedliche Einbaudimmer bekannt, die auf Normschienen in einem elektrischen Verteilerschrank montiert werden können.

Aus der EP 0 391 211 A ist eine elektronische Zeitprogramm-Schalteinrichtung, insbesondere Schaltuhr, bekannt, welche sich aus einem Leistungs- bzw. Grundteil und mindestens einer weiteren als Modul ausgebildeten Bau-Gruppe - einem abnehmbaren Bedienteil - zusammensetzt, wobei Steckverbinder zwischen den Baueinheiten vorgesehen sind. Der Vorteil der Schaltuhr aus modularem Bedienteil und Leistungs-/bzw. Grundteil besteht unter Anderem darin, dass nicht nur das abnehmbare Bedienteil für sich allein programmiert werden kann, sondern dass es auch ohne Komplikationen ausgetauscht werden kann, sei es im Falle eines Defekts oder im Falle der Auswechslung durch einen anderen Typ von Bedienteil.

Aus der DE 296 22 062 U1 ist eine Schaltuhr mit elektronischer Programmiereinheit und einem Kartenleser bekannt, über den Arbeitsprogramme und Daten von einer elektronischen Programmspeicherkarte in die mit einer eigenen Reserveenergiequelle versehene Programmiereinheit einlesbar sind. Die elektronische Programmiereinheit ist in einem ersten Gehäuseteil angeordnet und mit einem zweiten Gehäuseteil lösbar über eine Steuerungsschnittstelle mit Kontaktbuchsen/Kontaktstiften verbunden, in welchem von der Programmiereinheit gesteuerte elektromechanische und/oder elektronische Leistungsschalter mit einem Netzteil untergebracht sind.

Der Erfindung liegt die Aufgabe zugrunde, einen universell einsetzbaren Einbaudimmer anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass zusätzliche, einen zusätzlichen Aufwand darstellende externe Geräte zur Bedienung nicht erforderlich sind, da der in einem Verteilerschrank installierte Einbaudimmer direkt an der Oberseite das gewünschte Bedienelement aufweist. Da jedoch die potentiellen Bedienarten unterschiedlicher Art sind (Drehen, Tippen, Zeitsteuerung, usw.), wird erfindungsgemäß vorgeschlagen, den eigentlichen Dimmer und die Bedienelemente modular zu trennen. Die elektrische Verbindung zwischen Dimmer und Bedienelement erfolgt über eine interne Schnittstelle (Steckverbinder), über die das Dimmer-Lastteil durch entsprechende Betätigung des Bedienelements gesteuert wird.

Es ergeben sich für unterschiedliche Bedienarten einheitliche Dimmer-Lastteile und dadurch große Stückzahlen, was sich positiv auf die Herstellkosten auswirkt. Das vorgeschlagene Konzept des modular aufgebauten Einbaudimmers erlaubt eine kleinere Typenvielfalt bzw. Lagerhaltung und gibt dem Installateur die Möglichkeit, vor Ort die Bedienart des Einbaudimmers in Absprache mit dem Kunden (nachträglich) festzulegen und zu verändern. Auch eine spätere Veränderung der Bedienart ist durch einfaches Austauschen des Bedienelementes, d. h. der Abdeckkappe jederzeit ohne großen Aufwand möglich. Zusätzlich verfügt das Dimmer-Lastteil natürlich weiter über die Möglichkeit der Bedienung durch über Steuerleitungen angeschlossene Nebenstellen oder über ein Bus-System. Wird nur diese Bedienung gewünscht, kann das Bedienelement auf dem Dimmer-Lastteil auch völlig entfallen und lediglich eine Blindkappe aufgesteckt werden, um den Steckverbinder auf der Oberseite des Dimmer-Gehäuses abzudecken.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: einen modularen Einbaudimmer mit unterschiedlichen Abdeckkappen,
- Fig. 2: ein Bedienteil für die Abdeckkappe erster Ausführungsform (Drehbedienung),
- Fig. 3: ein Bedienteil für die Abdeckkappe zweiter Ausführungsform (Tastbedienung),
- Fig. 4: ein Bedienteil für die Abdeckkappe dritter Ausführungsform (Zeitsteuerung).

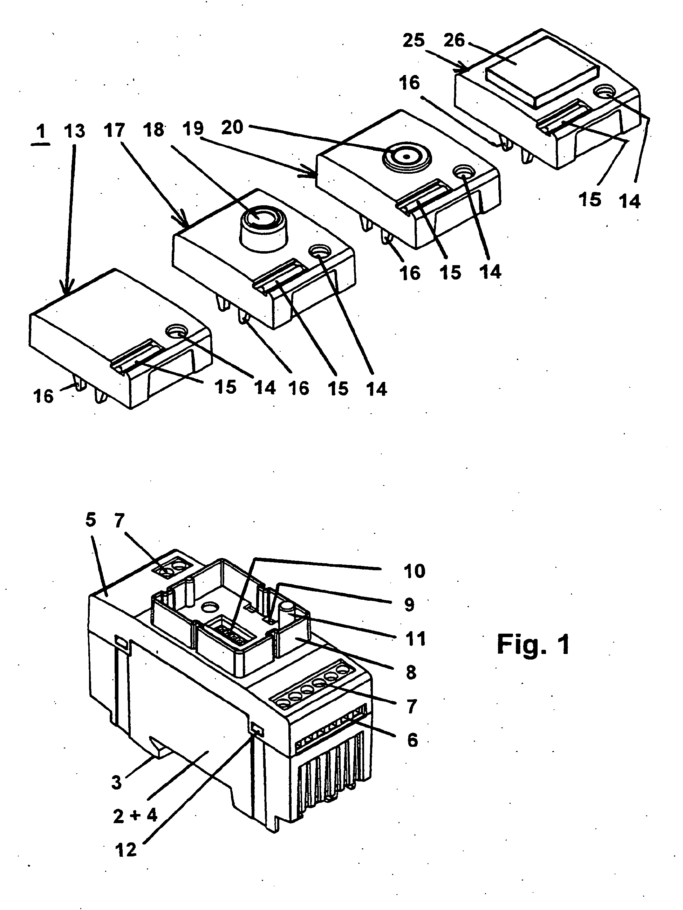

In Fig. 1 ist ein modularer Einbaudimmer mit unterschiedlichen Abdeckkappen (respektive Bedienelementen) dargestellt. Der modulare Einbaudimmer 1 weist die Form eines Quaders auf und setzt sich zusammen
- aus einem Gehäuse mit Gehäuse-Unterteil 2 und Gehäuse-Oberteil 5 mit darin eingebautem Dimmer-Lastteil 4 inklusive Anschlusseinheit,
- aus einem Bedienelement, d. h. einer Abdeckkappe erster Ausführungsform 17 mit einem Drehknopf 18 zur Dimmer-Betätigung oder einer Abdeckkappe zweiter Ausführungsform 19 mit einer Tipptaste 20 zur Dimmer-Betätigung oder einer Abdeckkappe dritter Ausführungsform 25 mit einer Timer-Eingabe/Anzeigeeinheit 26 oder einer Abdeckkappe vierter Ausführungsform 13, welche als Blindkappe fungiert und (außer einer Reset-Taste) keinerlei Handbetätigungselemente aufweist.

Das Gehäuse-Unterteil 2 weist in seinem Bodenteil Montagemittel 3 zur Befestigung auf einer Normschiene auf, so dass eine Montage des Einbaudimmers in einem elektrischen Verteilerschrank in einfacher Art und Weise ermöglicht wird.

Die Verbindung zwischen Gehäuse-Unterteil 2 und Gehäuse-Oberteil 5 erfolgt durch mehrere Rastverbindungen 12.

Das Gehäuse-Oberteil 5 weist an seinen schmalen Stimseiten Fenster 6 zur Einführung von Anschlussleitungen (Steuerleitungen, Phase, Nulleiter) sowie an seiner Oberseite hierzu korrespondierende Fenster 7 für die Betätigung entsprechender Anschlussschrauben zur Befestigung dieser Anschlussleitungen an Anschlussklemmen auf. Die Anschlussklemmen sind Teil einer Anschlusseinheit des Dimmer-Lastteils 4. Auf die Oberseite des Gehäuse-Oberteils 5 ist ein rechteckförmiger Rahmen 8 aufgesetzt bzw. einstückig angeformt. Die Abmessungen des Rahmens 8 korrespondieren mit den Abmessungen der vorstehend erwähnten, wannenförmigen Abdeckkappen 13, 17, 19, 25, so dass die Seitenwände der Abdeckkappen abdichtend über den Rahmen 8 greifen, was eine staubdichte Verbindung zwischen Gehäuse-Oberteil 5 und aufgesetzter Abdeckkappe 13 oder 17 oder 19 oder 25 ermöglicht. Zur Fixierung der Abdeckkappe 13, 17, 19, 25 greifen Rasthaken 16 der Abdeckkappen 13, 17, 19 in Rastöffnungen 9 der Oberseite des Gehäuse-Oberteils 5 (innerhalb der durch den Rahmen 8 gebildeten Fläche).

Das Gehäuse-Oberteil 5 weist innerhalb der durch den Rahmen 8 gebildeten Fläche ein erstes Fenster auf, durch das ein Steckverbinder 10 des Dimmer-Lastteils 4 kontaktierbar ist. Ein zweites Fenster dient zur Durchführung eines Bedienknopfes 11, über den ein Reset am Dimmer durchgeführt werden kann (Reset-Taste). Entsprechende Fenster 14 zum Durchtritt des Bedienknopfes 11 sind auch in den Abdeckkappen 13, 17, 19, 25 vorhanden. Auf der Oberseite der Abdeckkappen 13, 17, 19, 25 ist ein Beschriftungsfeld 15 vorgesehen, in dem ein kleiner Kunststoffträger mit einem beschrifteten Schild eingeschoben werden kann, um derart die genaue Funktion des Einbaudimmers 1 innerhalb einer Installationsanlage dokumentieren zu können.

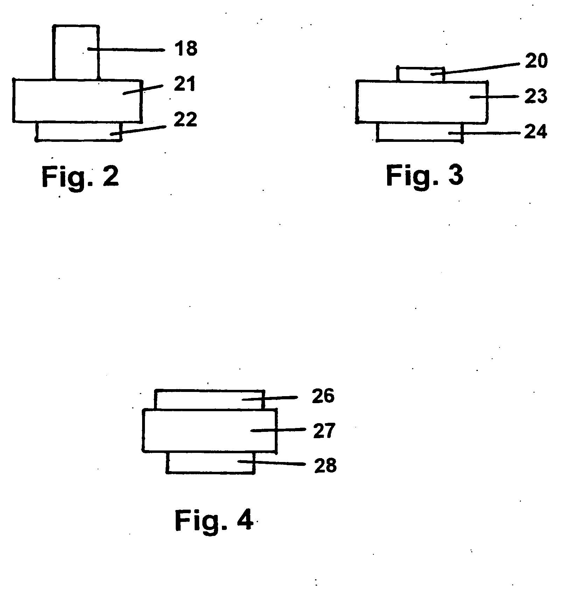

In Fig. 2 ist ein Bedienteil für die Abdeckkappe 17 erster Ausführungsform (erstes Bedienelement: Drehbedienung) dargestellt. Der Drehknopf 18 beaufschlagt bei Betätigung eine Dimmer-Elektronik 21 für Drehbedienung, welche über einen Steckverbinder 22 den Steckverbinder 10 des Dimmer-Lastteils 4 beaufschlagt.

In Fig. 3 ist ein Bedienteil für die Abdeckkappe 19 zweiter Ausführungsform (zweites Bedienelement: Tastbedienung) dargestellt. Die Tipptaste 20 beaufschlagt bei Betätigung eine Dimmer-Elektronik 23 für Tastbedienung, welche über einen Steckverbinder 24 den Steckverbinder 10 des Dimmer-Lastteils 4 beaufschlagt.

In Fig. 4 ist ein Bedienteil für die Abdeckkappe 25 dritter Ausführungsform (drittes Bedienelement: Zeitsteuerung) dargestellt. Die Timer-Eingabe/Anzeigeeinheit 26 steht in direkter Verbindung mit einer Dimmer-Elektronik 27 für Zeitsteuerung, welche über einen Steckverbinder 28 den Steckverbinder 10 des Dimmer-Lastteils 4 beaufschlagt. Analog hierzu kann ein viertes Bedienteil realisiert werden, welches zur Funksteuerung des Dimmers dient und dementsprechend eine Dimmer-Elektronik für Funksteuerung aufweist, welche über einen Steckverbinder den Steckverbinder 10 des Dimmer-Lastteils 4 beaufschlagt. Weitere Bedienelemente sind denkbar.

Zusammenfassend sind mit Hilfe der vorstehend erwähnten Baukomponenten des modularen Einbaudimmers 1 folgende unterschiedliche Ausführungsformen realisierbar:
- Einbaudimmer, welcher mit Hilfe von angeschlossenen Steuerleitungen über eine entfernte Bedienstelle (oder auch mehrere Bedienstellen) des Installationsnetzes eine Einstellung der Helligkeit von Beleuchtungsmitteln ermöglicht: Aufrasten der Abdeckkappe 13 (Blindkappe) auf das Gehäuse 2/5.
- Einbaudimmer, welcher an zentraler Stelle in der Elektroverteilung (Verteilerschrank) über ein Bedienelement per Drehbedienung eine Einstellung der Helligkeit von Beleuchtungsmitteln ermöglicht: Aufrasten der Abdeckkappe 17 auf das Gehäuse 2/5.
- Einbaudimmer, welcher an zentraler Stelle in der Elektroverteilung (Verteilerschrank) über ein Bedienelement per Tastendruck eine Einstellung der Helligkeit von Beleuchtungsmitteln ermöglicht: Aufrasten der Abdeckkappe 19 auf das Gehäuse 2/5.
- Einbaudimmer, welcher an zentraler Stelle in der Elektroverteilung (Verteilerschrank) über ein Bedienelement die Bedienart "Zeitsteuerung" eines Dimmers bzw. eines über den Dimmer betriebenen Leuchtmittels ermöglich, wobei eine Timer-Eingabeeinheit + Anzeigeeinheit eingesetzt wird, welche unter anderem ein Display hat, das die Uhrzeit bzw. im Programmiermodus die gewünschte (eingestellte) Schaltzeit anzeigt. Der Einbaudimmer schaltet bzw. dimmt folglich zu programmierten Zeiten automatisch das entsprechende Leuchtmittel: Aufrasten der Abdeckkappe 25 inklusive Timer-Eingabe/Anzeigeeinheit.
- Einbaudimmer, welcher an zentraler Stelle in der Elektroverteilung (Verteilerschrank) über ein Bedienelement die Bedienart "Funksteuerung" eines Dimmers bzw. eines über den Dimmer betriebenen Leuchtmittels ermöglicht, wobei ein Bedienelement für Funksteuerung über einen oder mehrere exteme(n) Funksender beaufschlagbar ist.

### Bezugszeichenliste:

- 1: Modulaler Einbaudimmer
- 2: Gehäuse-Unterteil
- 3: Montagemittel zur Befestigung auf Normschiene
- 4: Dimmer-Lastteil
- 5: Gehäuse-Oberteil
- 6: Fenster für Anschlussleitungen (Steuerleitungen, Phase, Nullleiter)
- 7: Fenster für Anschlussschrauben
- 8: Rahmen
- 9: Rastöffnungen
- 10: Steckverbinder
- 11: Bedienknopf
- 12: Rastverbindungen
- 13: Abdeckkappe dritter Ausführungsform (Blindkappe)
- 14: Fenster für Bedienknopf
- 15: Beschriftungsfeld
- 16: Rasthaken
- 17: Abdeckkappe erster Ausführungsform
- 18: Drehknopf
- 19: Abdeckkappe zweiter Ausführungsform
- 20: Tipptaste
- 21: Dimmer-Elektronik für Drehbedienung
- 22: Steckverbinder
- 23: Dimmer-Elektronik für Tastbedienung
- 24: Steckverbinder
- 25: Abdeckkappe dritter Ausführungsform
- 26: Timer-Eingabe/Anzeigeeinheit
- 27: Dimmer-Elektronik für Zeitsteuerung
- 28: Steckverbinder

## Patentansprüche

1. Einbaudimmer mit einem Gehäuse (2, 5), welches ein Dimmer-Lastteil (4) und eine Anschlusseinheit aufweist und mit Montagemitteln (3) zur Befestigung auf einer Normschiene versehen ist, **dadurch gekennzeichnet,**
- **dass** das Dimmer-Lastteil (4) auf seiner Oberseite einen Steckverbinder (10) aufweist, welcher mit einem korrespondierenden Steckverbinder (22, 24, 28) eines Bedienelements elektrisch in Kontakt tritt, wobei ein- und dasselbe Dimmer-Lastteil (4) wahlweise mit verschiedenen Bedienelementen bestückbar ist, wie z. B.
• Bedienelement für Drehbedienung (17, 18, 21, 22)
• Bedienelement für Tastbedienung (19, 20, 23, 24)
• Bedienelement für Zeitsteuerung (25, 26, 27, 28)
• Bedienelement für Funksteuerung
- **dass** jedes Bedienelement eine wannenförmige Abdeckkappe (13, 17, 19, 25) aufweist, welche über Rasthaken (16) mit Rastöffnungen (9) des Gehäuse-Oberteils (5) verrastet,
- und **dass** das Gehäuse-Oberteil (5) einen Rahmen (8) aufweist, über den die Seitenwandung der Abdeckkappe (13, 17, 19, 25) greift.

2. Einbaudimmer nach Anspruch 1, **dadurch gekennzeichnet, dass** eine Blindkappe als Abdeckkappe (13) verwendbar ist.

3. Einbaudimmer nach Anspruch 1 oder 2, **dadurch gekennzeichnet, dass** ein als Reset-Taste dienender Bedienknopf (11) ein Fenster (14) der Abdeckkappe (13, 17, 19, 25) durchbricht.

4. Einbaudimmer nach einem der vorstehenden Ansprüche, **dadurch gekennzeichnet, dass** die Abdeckkappe (13, 17, 19, 25) ein Beschriftungsfeld (15) aufweist.

## Claims

1. Built-in dimmer having a housing (2, 5), which housing has a dimmer load part (4) and a connection unit, and is provided with mounting means (3) for mounting on a standard rail, **characterized**
- **in that** the dimmer load part (4) has a plug connector (10) on its upper face, the said plug connector coming into electrical contact with a corresponding plug connector (22, 24, 28) of an operator control element, wherein one and the same dimmer load part (4) can be selectively fitted with different operator control elements, for example
• an operator control element for rotary operator control (17, 18, 21, 22)
• an operator control element for touch-operated operator control (19, 20, 23, 24)
• an operator control element for time control (25, 26, 27, 28)
• an operator control element for radio control,
- **in that** each operator control element has a trough-like covering cap (13, 17, 18, 25) which latches to latching openings (9) in the housing upper part (5) by means of latching hooks (16),
and **in that** the housing upper part (5) has a frame (8), the side wall of the covering cap (13, 17, 19, 25) engaging over the said frame.

2. Built-in dimmer according to Claim 1, **characterized in that** a blind cap can be used as the covering cap (13).

3. Built-in dimmer according to Claim 1 or 2, **characterized in that** an operator control button (11) which serves as a reset key breaks through a window (14) in the covering cap (13, 17, 19, 25).

4. Built-in dimmer according to one of the preceding claims, **characterized in that** the covering cap (13, 17, 19, 25) has a labelling area (15).

## Revendications

1. Variateur encastrable comprenant un boîtier (2, 5) qui présente une partie de charge de variateur (4) et une partie de raccordement et comprenant des moyens de montage (3) pour la fixation sur un rail DIN, **caractérisé en ce que**
- la partie de charge de variateur (4) présente, sur son côté supérieur, un connecteur enfichable (10) qui vient en contact électrique avec un connecteur enfichable correspondant (22, 24, 28) d'un élément de commande, une seule et même partie de charge de variateur (4) pouvant au choix être munie de différents éléments de commande, comme par exemple
- un élément de commande pour commande à rotation (17, 18, 21, 22)
- un élément de commande pour commande à touche (19, 20, 23, 24),
- un élément de commande pour commande temporelle (25, 26, 27, 28),
- un élément de commande pour commande radio
- **en ce que** chaque élément de commande présente un capuchon de recouvrement (13, 17, 19, 25) en forme de cuvette, qui s'encliquette par le biais de crochets d'encliquetage (16) avec des ouvertures d'encliquetage (9) de la partie supérieure du boîtier (5),
- et **en ce que** la partie supérieure du boîtier (5) présente un cadre (8) avec lequel la paroi latérale du capuchon de recouvrement (13, 17, 19, 25) s'engage par le dessus.

2. Variateur encastrable selon la revendication 1, **caractérisé en ce qu'**un capuchon borgne peut être utilisé comme capuchon de recouvrement (13).

3. Variateur encastrable selon la revendication 1 ou 2, **caractérisé en ce qu'**un bouton de commande (11) servant de touche de réinitialisation traverse une fenêtre (14) du capuchon de recouvrement (13, 17, 19, 25).

4. Variateur encastrable selon l'une quelconque des revendications précédentes, **caractérisé en ce que** le capuchon de recouvrement (13, 17, 19, 25) présente un champ d'inscriptions (15).
